# EUROPÄISCHE PATENTSCHRIFT

(11) **EP 3 826 781 B1**
(45) Veröffentlichungstag und Bekanntmachung des Hinweises auf die Patenterteilung: **06.03.2024**
(21) Anmeldenummer: 19737101.6
(22) Anmeldetag: 09.07.2019
(51) Int. Cl.: B21B 38/04

(54) **VERFAHREN UND VORRICHTUNG ZUR ERMITTLUNG DER SEITLICHEN BANDKONTUR ODER DER POSITION DER BANDKANTEN EINES LAUFENDEN METALLBANDES**
METHOD AND DEVICE FOR DETERMINING THE LATERAL CONTOUR OF A RUNNING METAL STRIP
PROCÉDÉ ET DISPOSITIF DE DÉTERMINATION DU CONTOUR DE BANDE LATÉRAL D'UNE BANDE MÉTALLIQUE EN MOUVEMENT

(30) Priorität: 25.07.2018 EP 18185390
(43) Veröffentlichungstag der Anmeldung: 02.06.2021
(73) Patentinhaber: Primetals Technologies Austria GmbH, 4031 Linz (AT)
(72) Erfinder: MOSER, Friedrich, 4202 Hellmonsoedt (AT)
(74) Vertreter: Metals@Linz
(86) Internationale Anmeldenummer: PCT/EP2019/068406
(87) Internationale Veröffentlichungsnummer: WO 2020/020633

(56) Entgegenhaltungen:
- WO-A1-2015/043926
- DE-A1-102004 043 790
- DE-A1-102006 024 761

## Beschreibung

### Gebiet der Technik

Die Erfindung betrifft eine Seitenführung mit einer Vorrichtung zur Ermittlung der seitlichen Bandkontur und eine Metallband-Fördervorrichtung umfassend eine solche Seitenführung, ein Verfahren zur Ermittlung der seitlichen Bandkontur und/oder der Position der Bandkanten eines über eine Metallband-Fördervorrichtung eines Walzwerkes laufenden Metallbandes sowie ein Verfahren zur Korrektur des Bandlaufes.

### Stand der Technik

Beim Auswalzen in einem Walzwerk wird die Dicke von durch Walzgerüste laufenden Metallbändern schrittweise reduziert, wobei die Dickenreduktion auch zu Veränderung der Breite führt. Über die Länge des Metallbandes kann die Orientierung der Seitenkanten relativ zur Längsachse des Metallbandes - im Rahmen dieser Anmeldung auch seitliche Bandkontur genannt - verschieden sein. Beispielsweise kann es zu sogenannter Säbelbildung kommen, wobei eine Seitenkante in Richtung Längsachse wandert, während die andere Seitenkante in Richtung von der Längsachse weg wandert. Bevorzugt ist eine weitgehende parallele Ausrichtung der Seitenkanten zur Längsachse. Es wird versucht, Abweichungen von diesem gewünschten Idealzustand frühzeitig zu erkennen, um Gegenmaßnahmen einleiten zu können. Beispielsweise wird die seitliche Bandkontur mittels Kameras überwacht, und gegebenenfalls durch Veränderungen der Stellung der Walzen in den Walzgerüsten einer ungünstigen Entwicklung gegengesteuert. Die dazu notwendige Ausstattung mit Kameras benötigt jedoch Platz, erhöht die Komplexität des Walzwerks, ist teuer und wartungsintensiv, und ist unter den für optische Erkennung ungünstigen Umweltbedingungen fehleranfällig.

Aus DE102004043790A1 ist es bekannt, mit speziellen Vorrichtungen durch Messen von Position und/oder Druckkraft einer Kante des Metallbandes eine Säbelbildung festzustellen und entsprechend eine Änderung der Walzspaltgeometrie zu veranlassen.

### Zusammenfassung der Erfindung

### Technische Aufgabe

Es sollen eine Vorrichtung und ein Verfahren zu ihrem Betrieb vorgestellt werden, die eine baulich einfachere Ermittlung der seitlichen Bandkontur und/oder der Position der Bandkanten eines in einem Walzwerk laufenden Metallbandes erlauben.

### Technische Lösung

Diese Aufgabe wird gelöst durch eine Vorrichtung gemäß Anspruch 1.

Das Metallband läuft in dem Walzwerk über eine Metallband-Fördervorrichtung, beispielsweise einen Rollgang.

Die seitliche Bandkontur und/oder die Position zumindest der Bandkanten kann beispielsweise vor einem Walzgerüst, nach einem Walzgerüst, zwischen verschiedenen Walzgerüsten ermittelt werden.

Es kann die seitliche Bandkontur und/oder die Position der Bandkanten des gesamten Metallbandes ermittelt werden, oder eines Abschnittes des Metallbandes.

Seitenführungen dienen dazu, das Metallband durch Kontakt mit seinen Seitenkanten zu führen.

Erfindungsgemäß ist das zumindest eine Fühlelement in einer Seitenführung der Metallband-Fördervorrichtung integriert. Es kann auch in mehreren Seitenführungen, beispielsweise Seitenführungen beidseitig des Metallbandes, jeweils zumindest ein Fühlelement integriert sein. Es können auch in einer oder mehreren Seitenführungen mehrere Fühlelemente vorhanden sein. Bevorzugt sind zumindest zwei Fühlelemente derart installiert, dass auf jeder Längsseite des Metallbandes zumindest ein Fühlelement zur Erhebung von zur Bestimmung der seitlichen Bandkontur und/oder der Position zumindest der Bandkanten geeigneten Messdaten einsetzbar ist. Ein Fühlelement ist zur Erhebung von zur Bestimmung der seitlichen Bandkontur und/oder der Position der Bandkanten geeignete Messdaten geeignet, und kann in Kontakt mit der Seitenkante eines laufenden Metallbandes gebracht werden.

Erfindungsgemäß umfasst die Seitenführung zumindest einen in einem Grundkörpermodul der Seitenführung angeordneten Schleißkörper mit Schleißkörperverstellvorrichtung. Der Schleißkörper mit Schleißkörperverstellvorrichtung ist als Fühlelement ausgeführt.

Wie in WO2015043926A1, deren Offenbarung von der vorliegenden Anmeldung mit umfasst ist, dargelegt wird, hat die Seitenführung eine Führungsebene, beispielsweise die Führungsebene des Grundkörpermoduls der Seitenführung. Die Schleißkörper sind um eine Drehachse drehbar - wobei die Drehachse beispielsweise im Wesentlichen senkrecht zur Führungsebene der Seitenführung, welche beispielsweise die Führungsebene ihres Grundkörpermoduls ist, steht. Die Führungsebene der Seitenführung - die beispielsweise die Führungsebene ihres Grundkörpermoduls ist - ist vorzugsweise im Wesentlichen vertikal, bevorzugt im Betrieb auch im Wesentlichen senkrecht zur Bandoberfläche des laufenden Metallbandes stehend. Infolge der Drehbarkeit können die Schleißkörper verschiedene Drehpositionen einnehmen. Die Drehung kann in bestimmte diskrete Positionen erfolgen, die längere Zeit beibehalten werden; beispielsweise bezüglich einer Startposition um 8° beziehungsweise ein ganzzahliges Vielfaches von 8° gedreht und so lange verharrend, bis fortgeschrittener Verschleiß eine neue Position nötig macht. Die Drehung kann auch kontinuierlich erfolgen. Bevorzugt haben die Schleißkörper eine Schleißfläche, die im Wesentlichen plan und in allen Drehpositionen im Wesentlichen parallel zur Führungsebene ist.

Mit der Formulierung "im Wesentlichen" sind geringfügige Abweichungen von senkrecht beziehungsweise vertikal beziehungsweise parallel beziehungsweise plan umfasst, die beispielsweise durch Produktionstoleranzen bedingt sind; beispielsweise Abweichungen von bis zu +/- 5°.

Die Schleißkörper können beispielsweise scheibenförmig ausgebildet sein.

Die Schleißkörperverstellvorrichtung kann einen Drehantrieb zum Ändern der Drehposition der Schleißkörper bezüglich Drehung um die Drehachse umfassen. Sie kann auch einen Schubantrieb zum Verschieben des Schleißkörpers in Richtung der Drehachse umfassen. Die Schleißkörperverstellvorrichtung kann auch einen Drehantrieb zum Ändern der Drehposition der Schleißkörper bezüglich Drehung um die Drehachse und einen Schubantrieb zum Verschieben des Schleißkörpers in Richtung der Drehachse umfassen.

### Vorteilhafte Wirkungen der Erfindung

Erfindungsgemäße Bauweise erlaubt platzsparende Ausführbarkeit der Bandkonturermittlung beziehungweise Kantenpositionsermittlung und wirtschaftlich vorteilhafte Nutzung von bereits für einen anderen Zweck vorhandenen Elementen der Seitenführung als Fühlelement.

Erfindungsgemäß ist zumindest ein Schleißkörper mit Schleißkörperverstellvorrichtung als Fühlelement ausgeführt. Kontakt mit der Seitenkante des Metallbandes erfolgt mit der Schleißfläche des Schleißkörpers; das erfolgt ohnehin zur Erfüllung der Führungsfunktion der Seitenführung durch den Schleißkörper. Die Schleißkörperverstellvorrichtung ist beispielsweise geeignet zur Wegmessung gegenüber einer Referenz und/oder zur Messung von auf den Schleißkörper ausgeübter Kraft. Ein Schleißkörper mit Schleißkörperverstellvorrichtung kann als Fühlelement wirken, auch während die Führungsfunktion in der Seitenführung wahrgenommen wird.

Wenn die Schleißkörper um eine im Wesentlichen senkrecht zur Führungsebene stehende Drehachse drehbar sind - und ganz besonders, wenn sie auch eine Schleißfläche haben, die im Wesentlichen plan und in allen Drehpositionen parallel zur Führungsebene des Grundkörpermoduls ist -, ist es möglich, sowohl die Führungsfunktion als auch die Funktion als Fühlelement lange Zeit ohne Wechselbedarf wahrzunehmen. Dadurch, dass die Schleißkörper in verschiedene Drehpositionen gedreht werden können, kann Verschleiß infolge Führung verteilt werden, was die Lebensdauer der Schleißkörper erhöht. In Anlagen wie aus DE102006024761A1 bekannt verschleißt beispielweise das Führungslineal der Seitenführung vergleichsweise deutlich schneller. Wenn das Fühlelement als Führungselement genutzt werden würde, wäre es ebenso wie das Führungslineal oft und aufwändig auszutauschen. Zur Umgehung dieser Problematik in solchen Anlagen ist das Fühlelement dort nicht gleichzeitig als Führungselement genutzt und verschleißt daher weniger.

Eine oben beschriebene Bauart mit erhöhter Lebensdauer erlaubt es, Schleißkörper auch als Fühlelement zu nutzen, ohne dadurch hohen Erneuerungsbedarf für die Fühlelemente hervorzurufen. Weil keine von Schleißkörpern separate Fühlelemente notwendig sind, ist der Bau und die Wartung weniger aufwändig.

Vorteilhaft ist es, wenn mehrere Fühlelement vorhanden sind. Dadurch kann das Metallband besser vermessen werden, weil gleichzeitig an mehreren Stellen des Metallbandes Messdaten erhoben werden können.

Vorzugsweise ist eine Apparatur zur Herstellung des Kontaktes zum Startzeitpunkt mit einer vorausgewählten Startkontaktkraft vorhanden. Das kann beispielsweise mechanisch oder hydraulisch erfolgen, beispielsweise mit einem Federelement oder mit einem Hydrauliksystem beziehungsweise -zylinder.

Vorzugsweise ist das zumindest eine Fühlelement zur Wegmessung gegenüber einer Referenz geeignet.

Vorzugsweise ist das zumindest eine Fühlelement zur Messung von auf das Fühlelement ausgeübter Kraft geeignet.

Die Vorrichtung zur Ermittlung der seitlichen Bandkontur und/oder der Position der Bandkanten mit Schleißkörper kann grundsätzlich beispielsweise so ausgeführt sein, wie in WO2015043926A1, deren Inhalt von der vorliegenden Anmeldung mit umfasst ist, gezeigt.

Bevorzugt wird auf jeder der beiden Seitenkanten des Metallbandes zumindest ein Fühlelement in Kontakt gebracht werden. Es können an jeder der Seitenkanten auch mehrere Fühlelemente vorhanden sein.

Vorzugsweise ist eine Apparatur zur Aufrechterhaltung der zum Startzeitpunkt vom Fühlelement eingenommene Position, solange die vom Metallband auf das Fühlelement ausgeübten Kraft oberhalb 0 und unterhalb eines Grenzwertes bleibt, vorhanden.

Nach einer bevorzugten Ausführungsform ist die Vorrichtung zur Ermittlung der seitlichen Bandkontur und/oder der Position der Bandkanten auch zur Übermittlung von erhobenen Messdaten und/oder der seitlichen Bandkontur und/oder der Position der Bandkanten an Steuer- und/oder Regeleinrichtungen für Walzgerüste und/oder für Seitenführungen des Walzwerkes geeignet.

Ein weiterer Gegenstand der Anmeldung ist ein Verfahren gemäß Anspruch 7, zum Betrieb einer erfindungsgemäßen Vorrichtung.

Erfindungsgemäß wird Kontakt eines Fühlelementes mit einer Seitenkante des Metallbandes genutzt, um die Bandkontur zu bestimmen beziehungsweise die Position der Bandkanten bezüglich einer Referenz zu bestimmen. Durch den direkten Kontakt und Messung direkt am Metallband kann das genauer und bezüglich Umgebungsbedingungen weniger störanfällig als bei Methoden mit Beobachtung durch Kameras erfolgen.

Es kann auf jeder der beiden Seitenkanten des Metallbandes zumindest ein Fühlelement in Kontakt gebracht werden. Es können an jeder der Seitenkanten auch mehrere Fühlelemente vorhanden sein.

Der Kontakt erfolgt zum Startzeitpunkt mit einer vorausgewählten Startkontaktkraft, mit der das Fühlelement, bevorzugt möglichst behutsam unter Vermeidung einer Beschädigung der Seitenkante, an die Seitenkante angedrückt wird.

Ein Fühlelement wird zu einem Startzeitpunkt in Kontakt mit einer Seitenkante des laufenden Metallbandes gebracht. Startzeitpunkt bezieht sich dabei auf den Beginn des Verfahrens zur Ermittlung der seitlichen Bandkontur; das Verfahren beginnt mit Herstellung des Kontaktes zwischen Fühlelement und Seitenkante. Mittels des Fühlelementes werden, während das Metallband - beziehungsweise der zu vermessende Abschnitt des Metallbandes - an dem Fühlelement vorbei läuft, zu Bestimmung der seitlichen Bandkontur und/oder der Position der Bandkanten geeignete Messdaten erhoben. Das können beispielsweise Messdaten bezüglich eines Weges beziehungsweise Abstandes oder bezüglich einer Kraft sein. Wenn zum Herstellen des Kontakts - auch Anstellen genannt - beispielsweise ein Hydrauliksystem beziehungsweise -zylinder genutzt wird, können es auch Messdaten zu dem sich in dem Hydrauliksystem beziehungsweise -zylinder während des Metallbandlaufes ändernden Druck sein.

Die Messdaten können unter Aufrechterhaltung des Kontaktes gemessen werden, oder sich auf gegebenenfalls erfolgenden Wegfall des Kontaktes beziehen.

Auf Basis erhobener Messdaten wird in der Folge die seitliche Bandkontur und/oder die Position der Bandkanten ermittelt.

Nach einer bevorzugten Variante betreffen die Messdaten den Abstand des Fühlelementes von einer Referenz bei Kontakt mit der Seitenkante des Metallbandes. Es können beispielsweise Änderungen des Abstandes - also Wege - gemessen werden oder die Größe des Abstandes. Zum Beispiel wird zu einem Zeitpunkt, in dem Kontakt des Fühlelementes mit der Seitenkante des Metallbandes besteht, der Abstand des Fühlelementes von einer - grundsätzlich willkürlich vom Betreiber festlegbaren - Referenz bestimmt. Dabei kann der Abstand auch 0 betragen, wenn die Referenz entsprechend gewählt ist. Die Referenz kann beispielsweise ein Referenzpunkt beispielsweise im Walzwerk sein, oder eine Referenzposition eines Fühlelementes, das mehrere Positionen einnehmen kann.

Der Abstand des Fühlelementes von einer Referenz ist einfach messbar.

Nach einer bevorzugten Variante betreffen die Messdaten die vom Metallband auf das Fühlelement ausgeübte Kraft. Es können beispielsweise Änderungen der Kraft gemessen werden oder die Größe der Kraft. Die Kraft kann auch 0 sein, wenn beispielsweise aufgrund Säbelbildung Kontakt zwischen Seitenkante des Metallbandes und Fühlelement abreißt.

Die vom Metallband auf das Fühlelement ausgeübte Kraft ist einfach messbar.

Nach einer bevorzugten Variante werden nach dem Startzeitpunkt, während der Abschnitt des Metallbandes an dem Fühlelement vorbei läuft, Messdaten der vom Metallband auf das Fühlelement ausgeübten Kraft erhoben, wobei die zum Startzeitpunkt vom Fühlelement eingenommene Position aufrechterhalten wird, solange die vom Metallband auf das Fühlelement ausgeübten Kraft oberhalb 0 und unterhalb eines Grenzwertes bleibt. Der Grenzwert kann vom Betreiber des Verfahrens gewählt werden. Wird der Grenzwert überschritten, wird die Position so geändert, dass die Kraft abnimmt - dadurch wird Beschädigung der Seitenkante vermieden. Auf diese Weise kann einfach festgestellt werden, ob der Abschnitt einen Säbel aufweist. Da die Position des Fühlelementes sich im Vergleich zum Startzeitpunkt nicht ändert, kann eine Säbelbildung zu einer Erhöhung der Kraft führen, weil das Metallband aufgrund der Ausbuchtung stärker auf das Fühlelement drückt.

Messdaten der vom Metallband auf das Fühlelement ausgeübten Kraft werden erhoben. Die die zum Startzeitpunkt vom Fühlelement eingenommene Position wird aufrechterhalten, solange die vom Metallband auf das Fühlelement ausgeübten Kraft oberhalb 0 und unterhalb eines Grenzwertes bleibt. Die Aufrechterhaltung der zum Startzeitpunkt vom Fühlelement eingenommenen Position kann beispielsweise so erfolgen: das Fühlelement wird zur Kontaktherstellung zum Startzeitpunkt mit einem Hydraulikzylinder mit einer Startkontaktkraft an das Metallband angestellt, und dann wird der Hydraulikzylinder in dieser Position bezüglich Fluss von Hydraulikflüssigkeit zwischen seinen Kammern verriegelt. Um ein Überschreiten eines Grenzwertes der vom Metallband auf den Hydraulikzylinder ausgeübten Kraft zu vermeiden, kann ein entsprechend eingestelltes Ventil vorgesehen sein.

Wenn Säbelbildung zum Verlust des Kontaktes führt, geht die Kraft auf 0 zurück. Aufgrund des wegfallenden Widerstandes kann es dann sein, dass das Fühlelement seine Position etwas verändert.

Nach einer bevorzugten Variante erfolgt der Kontakt zum Startzeitpunkt mit einer vorausgewählten Startkontaktkraft, und wird nach dem Startzeitpunkt der Kontakt zwischen Seitenkante und Fühlelement mit Startkontaktkraft aufrechterhalten, während der Abschnitt des Metallbandes an dem Fühlelement vorbei läuft, und werden Messdaten von dazu notwendigen Änderungen des Abstandes zur Referenz erhoben. Auf diese Weise kann einfach festgestellt werden, ob der Abschnitt einen Säbel aufweist. Wenn ein Säbel vorliegt, muss das Fühlelement zur Aufrechterhaltung des Kontaktes seine zum Startzeitpunkt eingenommene Position verlassen um die Startkontaktkraft aufrechtzuerhalten.

Auf Basis der voranstehend diskutierten Messdaten wird die seitliche Bandkontur und/oder die Position der Bandkanten des Metallbandes beziehungsweise des Metallband-Abschnittes, an dem gemessen wurden, ermittelt. Beispielsweise kann sie auf einfache Weise unter Einbeziehung der Bandgeschwindigkeit und dem Zeitpunkt der Ermittlung der Messdaten aus den Messdaten errechnet werden. Beispielsweise zeigen die notwendigen Änderungen der Position des Fühlelementes zur Aufrechterhaltung des Kontakts mit Startkontaktkraft mit den entsprechenden Zeitpunktsinformationen, an welchen Stellen der Längserstreckung des vermessenen Metallbandes Einbuchtungen oder Ausbuchtungen von Säbeln vorhanden sind - somit kann die Bandkontur und/oder die Position der Bandkanten ermittelt werden.

Durch die Ermittlung der Position der Bandkante bezüglich einer Referenz kann erkannt werden, ob Abweichungen von einem gewünschten Bandlauf vorliegen. Beispielsweise kann erkannt werden, wenn ein Metallband, das die gewünschte Breite ohne Säbel aufweist, aus einem Walzgerüst gegenüber der gewünschten Bandlaufrichtung schief ein- oder ausläuft. Ebenso wie Säbelbildung ist so etwas unerwünscht und kann erfindungsgemäß durch Ermittlung der Position der Bandkanten einfach erkannt und in der Folge gegebenenfalls korrigiert werden.

Ein weiterer Gegenstand der Anmeldung ist ein Verfahren zur Korrektur des Bandlaufes eines über eine Metallband-Fördervorrichtung eines Walzwerkes, bevorzugt Warmwalzwerkes, laufenden Metallbandes, mittels einer erfindungsgemäßen Vorrichtung, dadurch gekennzeichnet, dass auf Basis der nach einem erfindungsgemäßen Verfahren erhobenen Messdaten und/oder auf Basis der ermittelten seitlichen Bandkontur und/oder der Position der Bandkanten Korrekturmaßnahmen an einem oder mehreren Walzgerüsten und/oder an einer oder mehreren Seitenführungen des Walzwerkes vorgenommen werden.

Bevorzugt ist eine Regelung der Korrekturmaßnahmen an Walzgerüsten und/oder an Seitenführungen, die auf Basis der erfindungsgemäß erhobenen Messdaten und/oder der erfindungsgemäß ermittelten seitlichen Bandkontur und/oder der Position der Bandkanten erfolgt.

Ein Walzwerk umfasst unter anderem Walzgerüste, Metallband-Fördervorrichtungen und Seitenführungen für das Metallband. Auf Basis der erhobenen Messdaten und/oder der seitlichen Bandkontur und/oder der Position der Bandkanten ermittelt nach einem erfindungsgemäßen Verfahren kann festgestellt werden, welche gegebenenfalls unerwünschte Bandkonturen beziehungsweise Bandläufe aktuell auftreten. Entsprechend lassen sich gegebenenfalls Korrekturmaßnahmen wie Verstellung von Walzen im Walzgerüst oder Verschiebung der Position von Seitenführungen vornehmen.

Beispielsweise ist der Abstand des Fühlelementes zu einem - beispielsweise dem in Laufrichtung nächsten -Stellglied, mit welchem die seitliche Bandkontur beeinflusst werden kann, bekannt - beispielsweise der Abstand zum Walzspalt des nächsten Walzgerüstes. Es kann dann bei bekannter Bandgeschwindigkeit berechnet werden, zu welchem Zeitpunkt eine Korrekturmaßnahme in dem Stellglied erfolgen sollte, und was für eine Korrekturmaßnahme erfolgen soll, um die festgestellte Abweichung von einer gewünschten seitlichen Bandkontur beziehungsweise einem gewünschten Bandlauf zu korrigieren.

Bei herkömmlichen Walzwerksanlagen besteht die Fertigstrasse aus 5-7 in Abständen zwischen 5-7 Meter angeordneten Walzgerüsten. Vor jedem Walzgerüst befindet sich als Seitenführung ein Bandeinlauflineal. Diese Bandeinlauflineale haben die Aufgabe den Bandanfang mittig in das Walzgerüst beziehungsweise dessen Walzspalt einzuführen. Werden gemäß einer erfindungsgemäßen Ausführung Fühlelemente in die Seitenführungen, beispielsweise in die verschiedenen Bandeinlauflineale, integriert, kann über mehrere Messpunkte über die sich erstreckende Bandlänge die Bandkontur vermessen werden. Nach einem ersten Fühlelement mit dem diesen Fühlelement nachfolgenden Walzgerüst getroffene Korrekturmaßnahme können auch unmittelbar nach diesem Walzgerüst mit einem weiteren Fühlelement überprüft werden. In der Folge kann gegebenenfalls mit einem zusätzlichen Korrekturschritt anhand der vom weiteren Fühlelements gemessenen Werte in einem folgenden Walzgerüst erneut zusätzlich korrigiert werden. Die Anzahl der möglichen Korrekturschritte ist beispielsweise abhängig von der Anzahl der Walzgerüste und der Anzahl der Fühlelemente beziehungsweise der Anzahl der mit Fühlelementen ausgestatteten Seitenführungen beziehungsweise Bandeinlauflinealen.

Grundsätzlich können auch Korrekturmaßnahmen vorgenommen werden, indem die Position von Seitenführungen verstellt wird.

Seitenführungen im Walzwerk können grundsätzlich beispielsweise so ausgeführt sein, wie in WO2015043926A1, deren Inhalt von der vorliegenden Anmeldung mit umfasst ist, gezeigt.

Ein weiterer Gegenstand der vorliegenden Anmeldung ist eine Signalverarbeitungseinrichtung mit einem maschinenlesbaren Programmcode, dadurch gekennzeichnet, dass er Regelbefehle zur Durchführung eines erfindungsgemäßen Verfahrens aufweist.

### Kurze Beschreibung der Zeichnungen

Die Erfindung wird anhand schematischer beispielhafter Darstellungen von Ausführungsformen erläutert.
Figuren 1a, 1b, 1c zeigen schematisch, wie ein Verfahren zur Ermittlung der seitlichen Bandkontur eines Abschnittes eines über eine Metallband-Fördervorrichtung eines Walzwerkes laufenden Metallbandes in einer erfindungsgemäßen Vorrichtung eingesetzt wird.
Figuren 2a, 2b, 2c zeigen schematisch, wie Messdaten zu einem Säbel unter Aufrechterhaltung des Kontaktes zwischen Seitenkante und Fühlelement erhoben werden.
Figur 3 zeigt schematisch eine Ausführungsform eines Fühlelementes.
Figur 4 zeigt schematisch Integration von Fühlelementen in eine Seitenführung.
Figur 5 zeigt schematisch eine Abweichung von einem gewünschten Bandlauf.

### Beschreibung der Ausführungsformen

### Beispiele

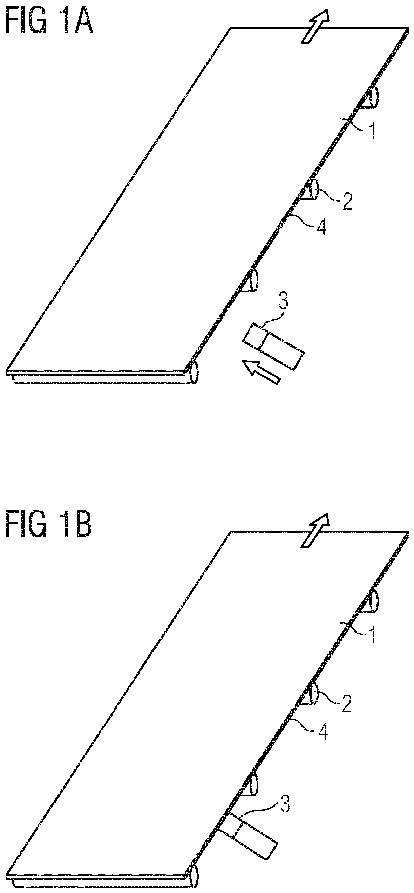

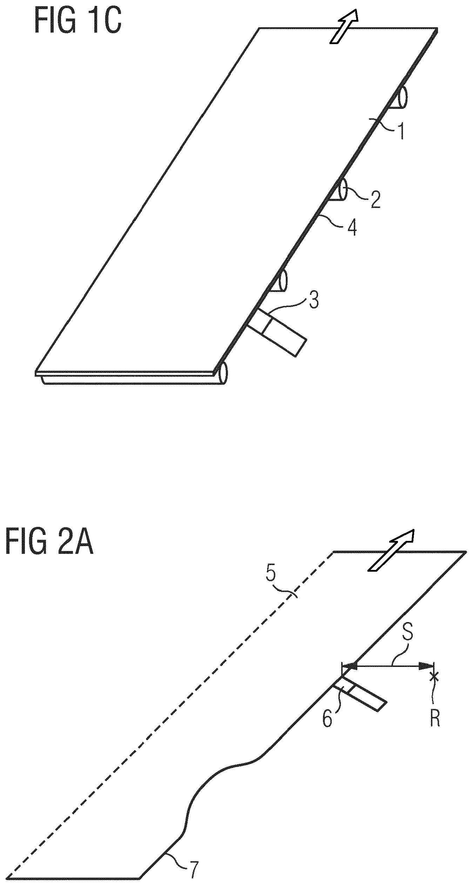

Die Figuren 1a, 1b, 1c zeigen schematisch, wie ein erfindungsgemäßes Verfahren zur Ermittlung der seitlichen Bandkontur eines Abschnittes eines über eine Metallband-Fördervorrichtung eines Walzwerkes laufenden Metallbandes eingesetzt wird.

In Figur 1a ist dargestellt, wie ein Metallband 1 über eine Metallband-Fördervorrichtung, hier einen Rollgang mit Rollgangsrollen 2, läuft. Die Laufrichtung ist mit einem Pfeil angedeutet. Ein Fühlelement 3 ist vorhanden, hat aber keinen Kontakt mit der Seitenkante 4 des Metallbandes 1. Durch einen Blockpfeil ist angedeutet, dass das Fühlelement in Richtung der Seitenkante 4 bewegt wird.

In Figur 1b ist der Startzeitpunkt des erfindungsgemäßen Verfahrens dargestellt. Kontakt zwischen Fühlelement 3 und Seitenkante 4 ist hergestellt. Es wird begonnen, zur Bestimmung der seitlichen Bandkontur und/oder der Position der Bandkanten geeignete Messdaten zu erheben, während der Abschnitt des Metallbandes an dem Fühlelement vorbei läuft, und der Kontakt bestehen bleibt, was in Figur 1c dargestellt ist.

Auf Basis erhobener Messdaten wird in der Folge die seitliche Bandkontur und/oder die Position der Bandkanten ermittelt.

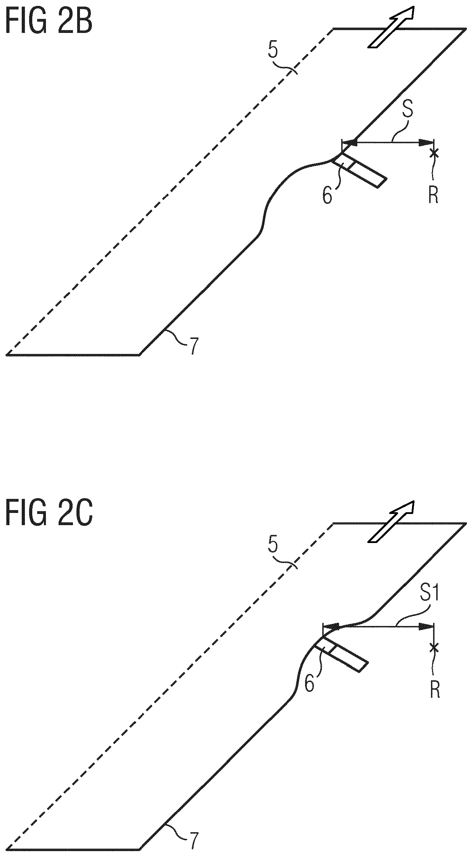

Figur 2a, 2b, 2c zeigen schematisch, wie ein Metallband 5 mit Säbel an einem Fühlelement 6, das Kontakt mit der Seitenkante 7 hat, vorbeiläuft. Die Laufrichtung ist mit einem Pfeil angedeutet. Dargestellt ist nur eine Seitenkante 7 des Metallbandes 5, welches nicht in seiner gesamten Breite dargestellt ist.

In Figur 2a ist der Abstand S des Fühlelementes 6 von einer Referenz R dargestellt. Eine Einbuchtung eines Säbels im Metallband 7 nähert sich dem Fühlelement 6. In Figur 2b erreicht die Einbuchtung das Fühlelement 6. Der Kontakt des Fühlelementes 6 mit der Seitenkante 7 wird aufrechterhalten, während das Metallband läuft. Um in der Einbuchtung den Kontakt aufrechtzuerhalten, wird wie in Figur 2c dargestellt das Fühlelement in die Einbuchtung bewegt. Der Abstand S1 zur Referenz R ist dementsprechend größer als der Abstand S. Bei einer säbelbedingten Ausbuchtung der Seitenkante würde der Abstand sich ebenfalls verändern, wenn das Fühlelement der Seitenkontur unter Aufrechterhaltung des Kontaktes folgend bewegt wird.

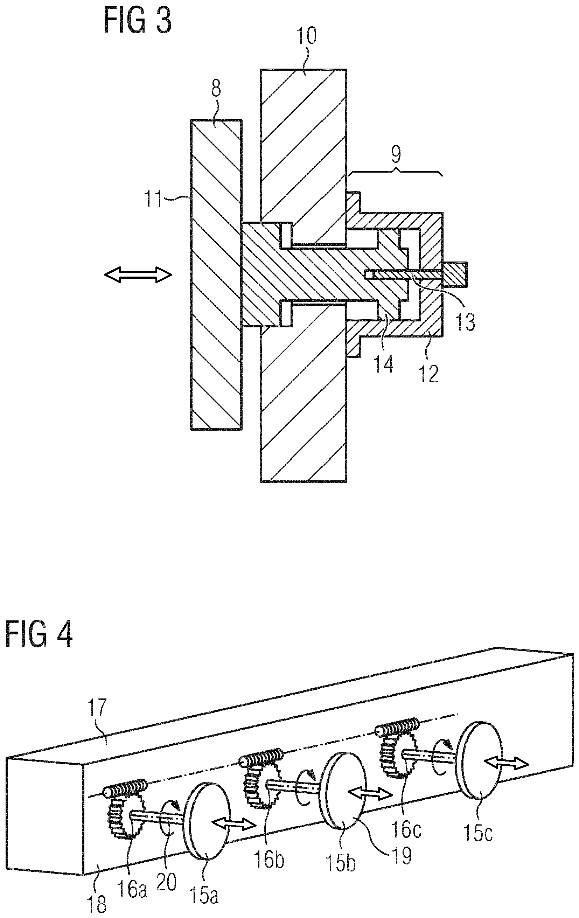

Figur 3 zeigt schematisch einen Schleißkörper 8 mit Schleißkörperverstellvorrichtung 9, wobei der Schleißkörper 8 mit Schleißkörperverstellvorrichtung 9 als Fühlelement ausgeführt ist und in einem Grundkörpermodul 10 einer Seitenführung eines Walzwerkes angeordnet werden kann. Kontakt mit einer Seitenkante eines Metallbandes erfolgt mit der Schleißfläche 11 des Schleißkörpers 8. Die Position des Schleißkörpers 8 kann mittels der Schleißkörperverstellvorrichtung 9 verstellt werden, was mit einem Doppelpfeil angedeutet ist. Die Schleißkörperverstellvorrichtung 9 umfasst einen Hydraulikzylinder 12, in dem ein Wegmesser 13 vorhanden ist, der beispielsweise Messdaten zu Änderungen der Position des Zylinderstempels 14 und damit des Schleißkörpers 8 erheben kann. Der Schleißkörper 8 oder die Schleißkörperverstellvorrichtung 9 können auch geeignet sein zur Messung von auf den Schleißkörper 8 ausgeübter Kraft, was zur besseren Übersichtlichkeit nicht extra dargestellt ist. Die Messdaten können erhoben werden, während der Schleißkörper in der Seitenführung seine Führungsaufgabe durch Kontakt mit der Seitenkante des Metallbandes erfüllt. Auf die Darstellung eines optional ebenfalls vorhandenen Drehantriebs wurde zur besseren Übersichtlichkeit verzichtet.

Figur 4 zeigt schematisch, wie als Fühlelement ausgeführte Schleißkörper 15a,15b, 15 c mit Schleißkörperverstellvorrichtungen 16a,16b,16c in einer Seitenführung 17 integriert sind. Dargestellt ist ein Grundkörpermodul der Seitenführung 17; die Führungsebene 18 der Seitenführung ist die Führungsebene des Grundkörpermoduls. Die Schleißkörper haben Schleißflächen 19, die im Wesentlichen plan und in allen Drehpositionen im Wesentlichen parallel zur Führungsebene 18 sind. Sie sind um die Drehachsen 20 drehbar - angedeutet durch einen runden Pfeil -, die im Wesentlichen senkrecht zur Führungsebene 18 stehen. Die Schleißkörperverstellvorrichtungen 16a,16b,16c umfassen im dargestellten Beispiel einen Drehantrieb zum Ändern der Drehposition der Schleißkörper bezüglich Drehung um die Drehachse und einen Schubantrieb zum Verschieben - dargestellt durch Doppelpfeile - des Schleißkörpers in Richtung der Drehachsen.

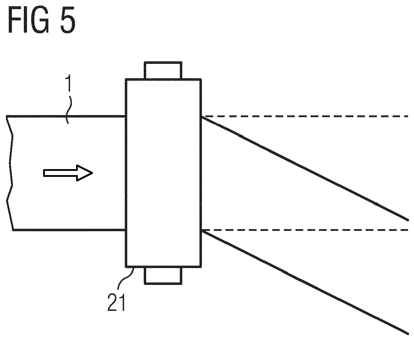

Figur 5 zeigt schematisch, wie ein Metallband 1 in Laufrichtung des Pfeiles in ein Walzgerüst 21 einläuft. In Laufrichtung gesehen hinter dem Walzgerüst 21 weicht das Band vom gewünschten Bandlauf ab - der gewünschte Bandlauf ist strichliert umrandet skizziert, der tatsächliche, davon unerwünscht abweichende Bandlauf ist durchgehend umrandet dargestellt.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen , im Rahmen des durch die Ansprüche definierten Schutzumfanges, zusammengefasst werden. Insbesondere sind diese Merkmale jeweils einzeln und in beliebiger geeigneter Kombination , im Rahmen des durch die Ansprüche definierten Schutzumfanges, in einem erfindungsgemäßen Verfahren kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die beschriebenen Eigenschaften, Merkmale und Vorteile der Erfindung sowie die Art und Weise, wie diese erreicht werden, werden klarer und deutlicher verständlich im Zusammenhang mit der Beschreibung des bzw. der Ausführungsbeispiele der Erfindung, die im Zusammenhang mit den Zeichnungen näher erläutert werden. Das bzw. die Ausführungsbeispiele dient bzw. dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels , im Rahmen des durch die Ansprüche definierten Schutzumfanges, auch explizit isoliert betrachtet, aus einem Ausführungsbeispiel entfernt, in ein anderes Ausführungsbeispiel zu dessen Ergänzung eingebracht und mit einer beliebigen der Ansprüche kombiniert werden.

Obwohl die Erfindung im Detail durch das bzw. die bevorzugten Ausführungsbeispiele näher illustriert und beschrieben wurde, so ist die Erfindung nicht durch das bzw. die offenbarten Beispiele eingeschränkt und andere Variationen können hieraus abgeleitet werden, ohne den Schutzumfang der Erfindung gemäß den Ansprüchen zu verlassen.

### Liste der Bezugszeichen

- 1: Metallband
- 2: Rollgangsrollen
- 3: Fühlelement
- 4: Seitenkante
- 5: Metallband
- 6: Fühlelement
- 7: Seitenkante
- 8: Schleißkörper
- 9: Schleißkörperverstellvorrichtung
- 10: Grundkörpermodul
- 11: Schleißfläche
- 12: Hydraulikzylinder
- 13: Wegmesser
- 14: Zylinderstempel
- 15a,15b,15c: Schleißkörper
- 16a,16b,16c: Schleißkörperverstellvorrichtung
- 17: Seitenführung
- 18: Schleißfläche
- 19: Führungsebene
- 20: Drehachse
- 21: Walzgerüst

### Liste der Anführungen

Patentliteratur
WO2015043926A1

## Patentansprüche

1. Seitenführung für eine Metallband-Fördervorrichtung eines Walzwerkes, bevorzugt Warmwalzwerkes,
mit einer Vorrichtung zur Ermittlung der seitlichen Bandkontur und/oder der Position der Bandkanten zumindest eines Abschnittes eines über die Metallband-Fördervorrichtung des Walzwerkes
laufenden Metallbandes (1),
die zumindest ein Fühlelement (3) zur Erhebung von zur Bestimmung der seitlichen Bandkontur und/oder der Position der Bandkanten geeigneten Messdaten aufweist, das geeignet ist, in Kontakt mit einer Seitenkante des laufenden Metallbandes gebracht zu werden,
**dadurch gekennzeichnet, dass**
das zumindest eine Fühlelement (3) in der Seitenführung (17) integriert ist,
wobei die Seitenführung (17) zumindest einen in einem Grundkörpermodul der Seitenführung angeordneten Schleißkörper (8) mit Schleißkörperverstellvorrichtung (9) umfasst,
der um eine im Wesentlichen senkrecht zu einer Führungsebene der Seitenführung stehende Drehachse drehbar ist,
wobei der Schleißkörper(8) mit Schleißkörperverstellvorrichtung (9) als Fühlelement ausgeführt ist,
wobei es bevorzugt ist, dass die Schleißkörper eine Schleißfläche, die im Wesentlichen plan und in allen Drehpositionen im Wesentlichen parallel zur Führungsebene ist, haben.

2. Seitenführung nach Anspruch 1, **dadurch gekennzeichnet, dass** eine Apparatur zur Herstellung des Kontaktes zum Startzeitpunkt mit einer vorausgewählten Startkontaktkraft vorhanden ist.

3. Seitenführung nach einem der Ansprüche 1 oder 2, **dadurch gekennzeichnet, dass** das zumindest eine Fühlelement zur Wegmessung gegenüber einer Referenz geeignet ist.

4. Seitenführung nach einem der Ansprüche 1 bis 3, **dadurch gekennzeichnet, dass** das zumindest eine Fühlelement zur Messung von auf das Fühlelement ausgeübter Kraft geeignet ist.

5. Seitenführung nach einem der Ansprüche 1 bis 4, **dadurch gekennzeichnet, dass** eine Apparatur zur Aufrechterhaltung der zum Startzeitpunkt vom Fühlelement eingenommene Position, solange die vom Metallband auf das Fühlelement ausgeübten Kraft oberhalb 0 und unterhalb eines Grenzwertes bleibt, vorhanden ist.

6. Metallband-Fördervorrichtung eines Walzwerkes, bevorzugt Warmwalzwerkes, umfassend eine Seitenführung nach einem der Ansprüche 1 bis 5.

7. Verfahren zur Ermittlung der seitlichen Bandkontur und/oder der Position der Bandkanten zumindest eines Abschnittes eines über eine Metallband-Fördervorrichtung eines Walzwerkes, bevorzugt Warmwalzwerkes, laufenden Metallbandes (1) mit einer Seitenführung nach einem der Ansprüche 1 bis 5 beziehungsweise einer Metallband-Fördervorrichtung nach Anspruch 6,
**dadurch gekennzeichnet, dass**
zu einem Startzeitpunkt zumindest ein Fühlelement (3) in Kontakt mit einer Seitenkante (4) des Metallbandes (1) gebracht wird,
und mittels des Fühlelementes (3) zur Bestimmung der seitlichen Bandkontur geeignete Messdaten erhoben werden, während der Abschnitt des Metallbandes (1) an dem Fühlelement (3) vorbei läuft.

8. Verfahren nach Anspruch 7, **dadurch gekennzeichnet, dass** die Messdaten den Abstand des Fühlelementes (3) von einer Referenz bei Kontakt mit der Seitenkante (4) des Metallbandes (1) betreffen.

9. Verfahren nach Anspruch 7 oder 8, **dadurch gekennzeichnet, dass** die Messdaten die vom Metallband (1) auf das Fühlelement (3) ausgeübte Kraft betreffen.

10. Verfahren nach Anspruch 9, **dadurch gekennzeichnet, dass** nach dem Startzeitpunkt, während der Abschnitt des Metallbandes (1) an dem Fühlelement (3) vorbei läuft, Messdaten der vom Metallband (1) auf das Fühlelement (3) ausgeübten Kraft erhoben werden, wobei die zum Startzeitpunkt vom Fühlelement (3) eingenommene Position aufrechterhalten wird, solange die vom Metallband (1) auf das Fühlelement (3) ausgeübten Kraft oberhalb 0 und unterhalb eines Grenzwertes bleibt.

11. Verfahren nach Anspruch 8, **dadurch gekennzeichnet, dass** der Kontakt zum Startzeitpunkt mit einer vorausgewählten Startkontaktkraft erfolgt, und nach dem Startzeitpunkt der Kontakt zwischen Seitenkante (4) und Fühlelement (3) mit Startkontaktkraft aufrechterhalten wird, während der Abschnitt des Metallbandes (1) an dem Fühlelement (3) vorbei läuft, und Messdaten von dazu notwendigen Änderungen des Abstandes zur Referenz erhoben werden.

12. Verfahren zur Korrektur des Bandlaufes eines über eine Metallband-Fördervorrichtung eines Walzwerkes, bevorzugt Warmwalzwerkes, laufenden Metallbandes (1), mittels einer Seitenführung nach einem der Ansprüche 1 bis 5 beziehungsweise einer Metallband-Fördervorrichtung nach Anspruch 6, **dadurch gekennzeichnet, dass** auf Basis der nach einem Verfahren gemäß einem der Ansprüche 7 bis 11 zur Ermittlung der seitlichen Bandkontur erhobenen Messdaten und/oder auf Basis der gemäß einem Verfahren nach einem der Ansprüche 7 bis 11 ermittelten seitlichen Bandkontur und/oder der gemäß einem Verfahren nach einem der Ansprüche 7 bis 11 ermittelten Position der Bandkanten Korrekturmaßnahmen an einem oder mehreren Walzgerüsten und/oder an einer oder an mehreren Seitenführungen des Walzwerkes vorgenommen werden, wobei bevorzugt eine Regelung der Korrekturmaßnahmen an Walzgerüsten und/oder an Seitenführungen auf Basis der erfindungsgemäß erhobenen Messdaten und/oder der erfindungsgemäß ermittelten seitlichen Bandkontur und/oder der Position der Bandkanten erfolgt.

## Claims

1. Lateral guide for a metal strip conveyor device of a rolling mill, preferably a hot-rolling mill,
having a device for determining the lateral strip contour and/or the position of the strip edges of at least one portion of a metal strip (1) running over the metal strip conveyor device of the rolling mill,
said device having at least one sensing element (3) which for gathering measuring data suitable for determining the lateral strip contour and/or the position of the strip edges is suitable to be brought into contact with a lateral edge of the running metal strip,
**characterized in that**
the at least one sensing element (3) is integrated in the lateral guide (17),
wherein the lateral guide (17) comprises at least one wear member (8) having a wear member adjustment device (9), said wear member (8) being disposed in a main member module of the lateral guide and being rotatable about a rotation axis that is substantially perpendicular to a guide plane of the lateral guide,
wherein the wear member (8) having the wear member adjustment device (9) is embodied as a sensing element,
wherein it is preferable that the wear members have a wear face which is substantially planar and in all rotary positions is substantially parallel to the guide plane.

2. Lateral guide according to Claim 1, **characterized in that** an apparatus for establishing contact by way of a preselected starting contact force at the starting time is present.

3. Lateral guide according to one of Claims 1 or 2, **characterized in that** the at least one sensing element is suitable for measuring a path in relation to a reference.

4. Lateral guide according to one of Claims 1 to 3, **characterized in that** the at least one sensing element is suitable for measuring a force exerted on the sensing element.

5. Lateral guide according to one of Claims 1 to 4, **characterized in that** an apparatus for maintaining the position assumed by the sensing element at the starting time, as long as the force exerted by the metal strip on the sensing element remains above 0 and below a limit value, is present.

6. Metal strip conveyor device of a rolling mill, preferably a hot-rolling mill, comprising a lateral guide according to one of Claims 1 to 5.

7. Method for determining the lateral strip contour and/or the position of the strip edges of at least one portion of a metal strip (1) running over a metal strip conveyor device of a rolling mill, preferably a hot-rolling mill, having a lateral guide according to one of Claims 1 to 5, or a metal strip conveyor device according to Claim 6,
**characterized in that**, at a starting time, at least one sensing element (3) is brought into contact with a lateral edge (4) of the metal strip (1),
and suitable measuring data for determining the lateral strip contour is gathered by means of the sensing element (3) while the portion of the metal strip (1) runs past the sensing element (3) .

8. Method according to Claim 7, **characterized in that** the measuring data relates to the spacing of the sensing element (3) from a reference when contacting the lateral edge (4) of the metal strip (1).

9. Method according to Claim 7 or 8, **characterized in that** the measuring data relates to the force exerted by the metal strip (1) on the sensing element (3).

10. Method according to Claim 9, **characterized in that**, after the starting time, while the portion of the metal strip (1) runs past the sensing element (3), measuring data of the force exerted by the metal strip (1) on the sensing element (3) is gathered, wherein the position of the sensing element (3) assumed at the starting time is maintained as long as the force exerted by the metal strip (1) on the sensing element (3) remains above 0 and below a limit value.

11. Method according to Claim 8, **characterized in that** contact at the starting time is established by way of a preselected starting contact force, and contact between the lateral edge (4) and the sensing element (3) after the starting time is maintained at the starting contact force while the portion of the metal strip (1) runs past the sensing element (3), and measuring data is gathered from variations in the spacing from the reference necessary to this end.

12. Method for correcting the running of a metal strip (1) running over a metal strip conveyor device of a rolling mill, preferably a hot-rolling mill, by means of a lateral guide according to one of Claims 1 to 5, or a metal strip conveyor device according to Claim 6, **characterized in that**, based on the measuring data gathered according to a method for determining the lateral strip contour, according to one of Claims 7 to 11, and/or based on the lateral strip contour determined according to a method according to one of Claims 7 to 11 and/or the position of the strip edges determined according to a method according to one of Claims 7 to 11, corrective measures are performed on one or a plurality of roll stands and/or on one or on a plurality of lateral guides of the rolling mill, wherein closed-loop controlling of the corrective measures on roll stands and/or on lateral guides is preferably performed based on the measuring data gathered according to the invention and/or the lateral strip contour determined according to the invention and/or the position of the strip edges.

## Revendications

1. Guide latéral pour un dispositif de transport de bande métallique d'un laminoir, de préférence d'un laminoir à chaud, avec un dispositif pour la détermination du contour de bande latéral et/ou de la position des bords de bande d'au moins une section d'une bande métallique (1) en mouvement sur le dispositif de transport de bande métallique du laminoir,
lequel comprend au moins un élément de détection (3) pour la collecte de données de mesure appropriées pour l'identification du contour de bande latéral et/ou de la position des bords de bande, lequel élément de détection est approprié pour être mis en contact avec un bord latéral de la bande métallique en mouvement,
**caractérisé en ce que**
l'au moins un élément de détection (3) est intégré dans le guide latéral (17),
le guide latéral (17) comportant au moins un corps d'usure (8) avec dispositif d'ajustement de corps d'usure (9)disposé dans un module de corps de base du guide latéral, lequel corps d'usure est rotatif autour d'un axe de rotation sensiblement perpendiculaire à un plan de guide du guide latéral,
dans lequel le corps d'usure (8) avec dispositif d'ajustement de corps d'usure (9) est conçu en tant qu'élément de détection, dans lequel il est préféré que les corps d'usure aient une surface d'usure qui soit sensiblement plane et, dans toutes les positions de rotation, sensiblement parallèle au plan de guide.

2. Guide latéral selon la revendication 1, **caractérisé en ce qu'**il est prévu un appareillage pour l'établissement du contact au moment du départ avec une force de contact de départ présélectionnée.

3. Guide latéral selon l'une des revendications 1 ou 2, **caractérisé en ce que** l'au moins un élément de détection est approprié pour la mesure de déplacement par rapport à une référence.

4. Guide latéral selon l'une des revendications 1 à 3, **caractérisé en ce que** l'au moins un élément de détection est approprié pour la mesure de la force exercée sur l'élément de détection.

5. Guide latéral selon l'une des revendications 1 à 4, **caractérisé en ce qu'**il est prévu un appareillage pour le maintien de la position adoptée par l'élément de détection au moment du départ tant que la force exercée par la bande métallique sur l'élément de détection reste au-dessus de 0 et au-dessous d'une valeur limite.

6. Dispositif de transport de bande métallique d'un laminoir, de préférence d'un laminoir à chaud, comportant un guide latéral selon l'une des revendications 1 à 5.

7. Procédé pour la détermination du contour de bande latéral et/ou de la position des bords de bande d'au moins une section d'une bande métallique (1) en mouvement sur un dispositif de transport de bande métallique d'un laminoir, de préférence d'un laminoir à chaud, avec un guide latéral selon l'une des revendications 1 à 5, respectivement un dispositif de transport de bande métallique selon la revendication 6,
**caractérisé en ce que**,
à un moment de départ, au moins un élément de détection (3) est mis en contact avec un bord latéral (4) de la bande métallique (1),
et au moyen de l'élément de détection (3), des données de mesure appropriées pour l'identification du contour de bande latéral sont collectées pendant que la section de la bande métallique (1) passe devant l'élément de détection (3).

8. Procédé selon la revendication 7, **caractérisé en ce que** les données de mesure concernent la distance de l'élément de détection (3) par rapport à une référence lors d'un contact avec le bord latéral (4) de la bande métallique (1).

9. Procédé selon la revendication 7 ou la revendication 8, **caractérisé en ce que** les données de mesure concernent la force exercée par la bande métallique (1) sur l'élément de détection (3) .

10. Procédé selon la revendication 9, **caractérisé en ce que**, après le moment du départ, pendant que la section de la bande métallique (1) passe devant l'élément de détection (3), des données de mesure de la force exercée par la bande métallique (1) sur l'élément de détection (3) sont collectées, dans lequel la position adoptée par l'élément de détection (3) au moment du départ est maintenue tant que la force exercée par la bande métallique (1) sur l'élément de détection (3) reste au-dessus de 0 et au-dessous d'une valeur limite.

11. Procédé selon la revendication 8, **caractérisé en ce que** le contact au moment du départ s'effectue avec une force de contact de départ présélectionnée, et après le moment du départ, le contact entre le bord latéral (4) et l'élément de détection (3) est maintenu avec la force de contact de départ pendant que la section de la bande métallique (1) passe devant l'élément de détection (3), et des données de mesure de modifications nécessaires à cet effet de la distance par rapport à la référence sont collectées.

12. Procédé pour la correction du mouvement de bande d'une bande métallique (1) en mouvement sur un dispositif de transport de bande métallique d'un laminoir, de préférence d'un laminoir à chaud, au moyen d'un guide latéral selon l'une des revendications 1 à 5, respectivement d'un dispositif de transport de bande métallique selon la revendication 6, **caractérisé en ce que**, sur la base des données de mesure collectées pour la détermination du contour de bande latéral selon un procédé selon l'une des revendications 7 à 11 et/ou sur la base du contour de bande latéral déterminé selon un procédé selon l'une des revendications 7 à 11 et/ou de la position des bords de bande déterminée selon un procédé selon l'une des revendications 7 à 11, des mesures correctives sont entreprises au niveau d'une ou de plusieurs cages de laminoir et/ou au niveau d'un ou de plusieurs guides latéraux du laminoir, dans lequel de préférence un réglage des mesures correctives s'effectue au niveau de cages de laminoir et/ou au niveau de guides latéraux sur la base des données de mesure collectées selon l'invention et/ou du contour de bande latéral déterminé selon l'invention et/ou de la position des bords de bande.
